# EUROPEAN PATENT SPECIFICATION

(11) **EP 3 477 452 B1**
(45) Date of publication and mention of the grant of the patent: **06.07.2022**
(21) Application number: 17199038.5
(22) Date of filing: 27.10.2017
(51) Int. Cl.: G06F 3/0488, G06F 3/042

(54) **ELECTRONIC DEVICE AND METHOD OF OPERATING AN ELECTRONIC DEVICE**
ELEKTRONISCHE VORRICHTUNG UND VERFAHREN FÜR DEN BETRIEB EINER ELEKTRONISCHEN VORRICHTUNG
DISPOSITIF ÉLECTRONIQUE ET PROCÉDÉ DE FONCTIONNEMENT DUDIT DISPOSITIF

(43) Date of publication of application: 01.05.2019
(73) Proprietor: Vestel Elektronik Sanayi ve Ticaret A.S., 45030 Manisa (TR)
(72) Inventor: ÖZEL, Ahmet, 45030 Manisa (TR)
(74) Representative: Martinez, Olivier Gildas

(56) References cited:
- WO-A1-2015/119637
- US-A1- 2012 327 029
- US-A1- 2017 285 789
- US-B1- 6 597 348
- US-B1- 9 207 810

## Description

### Technical Field

The present disclosure relates to an electronic device and a method of operating an electronic device.

### Background

Conventional electronic devices, such as mobile phones, handheld games consoles, etc., are equipped with user interface elements and input command units configured to output input commands in response to a user interacting with the user interface elements. The user interface elements are located on the housing of the electronic devices and typically comprise a touch screen, a press button, a slide buttons, a knob, a scroll wheel, joy stick or other.

US2012/0327029A1 describes a touch system comprising a light guide optically coupled to a light source and an optical detector.

US9207810B1 describes a set of optical fibres that may be used to enable touch input for a computing device.

US6597348B1 describes an information processing device which comprises a field sequential display unit and a touch panel.

### Summary

According to a first aspect disclosed herein, there is provided an electronic device according to claim 1.

According to a second aspect disclosed herein, there is provided a method of operating an electronic device according to claim 6.

Preferred embodiments of the present invention are defined in the dependent claims.

### Brief Description of the Drawings

To assist understanding of the present disclosure and to show how embodiments may be put into effect, reference is made by way of example to the accompanying drawings in which:
Figure 1 shows schematically an example of an electronic device according to an embodiment; and
Figure 2 shows schematically an example of a method of operating the electronic device of Figure 1 according to an embodiment.

### Detailed Description

With the increase in performance of mobile phones (e.g. processing power, memory size and battery capacity) the mobile gaming sector is expanding. An issue with conventional mobile phones is that they are provided with a limited number and type of user interface elements. As a result, playing a mobile game is not always convenient and sometimes even impossible. Similar problems arise for handheld games consoles, computer games games controllers, etc. There is a need to provide mobile phones and other such electronic devices with additional user interface elements which can be easily integrated in existing mobile phones.

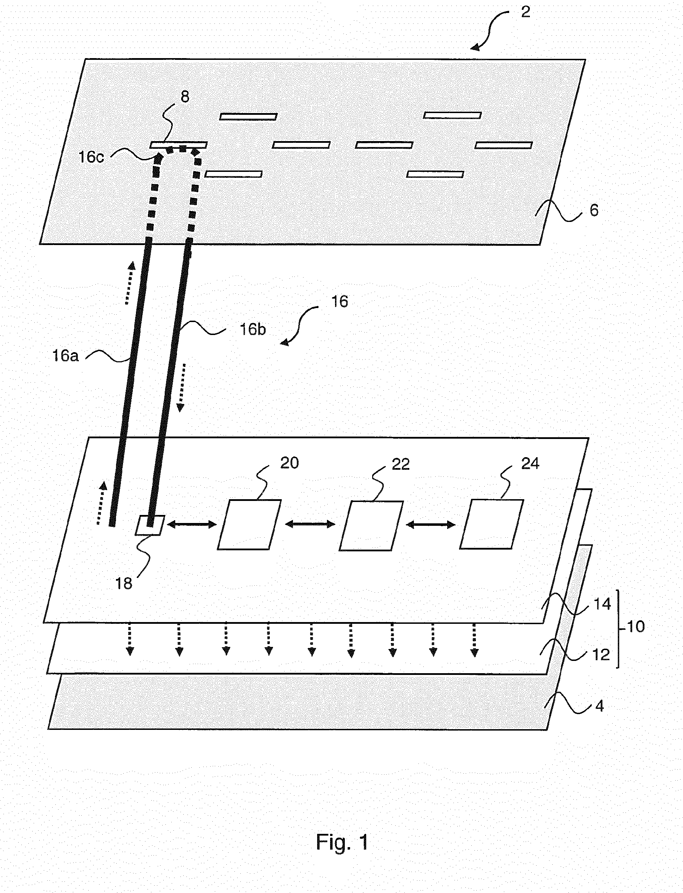

Figure 1 shows schematically an example of a mobile phone 2 according to an embodiment. The mobile phone 2 comprises a housing including a front face 4, a rear face 6 and lateral faces (not shown). The front face 4 refers to the face intended to be directed towards a user. The front face 4 comprise a window behind which is visible a display panel. Alternatively, the front face 4 directly comprises the display panel.

The rear face 6 comprises a plurality of openings 8. Here, each opening 8 is a slit and has a rectangular shape. However, it will be understood that each opening 8 can have a different shape (e.g. square, oval, triangular or other).

The mobile phone 2 comprises a display unit 10 for displaying information for the user. The displayed unit 10 may be any type of display unit such as an LCD (liquid crystal display) display unit or an OLED (organic light emitting diode) display unit. The display unit 10 comprises a display panel 12 and a light source 14 to illuminate the display panel 12.

Here, the light source 14 is a light panel. The light source is arranged behind the screen 12 and is part of a backlight source for the display panel 12.

The mobile phone 2 comprises a plurality of light guides 16 (although only one light guide 16 is represented on Figure 1 for clarity sake). Each light guide may comprise an optical fibre 16 and is configured to convey light from the light source 14 to a respective light sensor 18.

Each light guide 16 is associated with a respective opening 8. Each light guide 16 comprises an intermediate portion 16c optically connecting distal portions 16a, 16b. The distal portion 16a is also optically connected to the light source 14. The distal portion 16b is also optically connected to the light sensor 18.

Here, the intermediate portion 16c extends substantially parallel to the opening 8. The intermediate portion 16c faces this opening 8 and is preferably arranged to be flushed with the rear face 6 of the housing (i.e. the intermediate portion 16c neither protrudes from the rear face 6 nor is recessed from the rear face 6). In this way, when a user obstructs the opening 8, the user can obstruct the intermediate portion 16c as well.

The distal portions 16a, 16b may be optically insulated (e.g. cladded and coated) so that they have a higher reflection coefficient. The intermediate portion 16c may not be optically insulated (e.g. non-cladded and/or non-coated) or may be only partly optically insulated so that it has a lower reflection coefficient. For example, at least a surface of the intermediate portion 16c facing the opening 8 may not be optically insulated only partly optically insulated.

The light sensor 18 is configured to sense light from the light guide 16 and to convert this light into an electrical signal. The electrical signal is representative of an amount of light sensed by the light sensor 18. For example, at least one value (e.g. voltage, current, sweeping range, duty cycle, frequency or other) of the electrical signal is proportional to the amount of light sensed by the light sensor 18.

When a user obstructs the opening (e.g. with a finger), the user increases the reflection coefficient of the intermediate portion 16c and therefore increases the amount of light conveyed from the light source 14 to the light sensor 18. The light sensor 18 senses the light from the light guide 16 and outputs an electrical signal representative of the amount of light sensed by the light sensor 18.

The mobile phone 2 comprises an input command unit 20 electrically connected to the light sensor 18. The input command unit 20 is then configured to output an input command based on the electrical signal output by the light sensor 18.

In one implementation, the input command unit 20 is configured to determine an amount of light sensed by the light sensor 18 and to output an input command when the amount of light sensed by the light sensor is above or below a threshold.

In another implementation, the input command unit 20 is configured to determine a variation in the amount of light sensed by the light sensor 18 and to output an input command when the variation in the amount of light sensed by the light sensor is above or below a threshold.

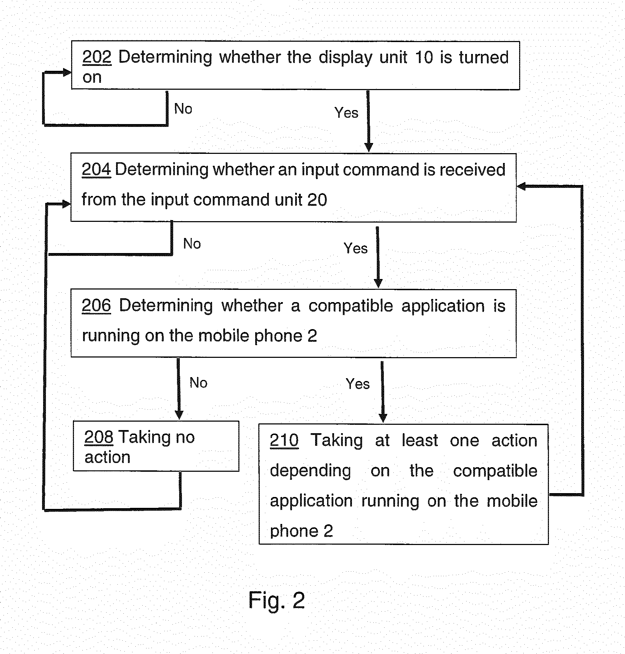

The mobile phone 2 comprises a control unit 22 (or processor) and a memory 24. The memory 24 comprises a computer program which when executed by the control unit 22 allow the control unit to perform the method of Figure 2.

The control unit 22 is configured to receive an input command from the input command unit 20 and to take an action when a compatible application is running. A compatible application is an application that accepts input command from the input command unit 20 and that takes a determined action when the input command is received. It will be understood that an application may be any piece of software program that can be run by the mobile phone 2. The application as used herein may for example include the operating system of the mobile phone 2.

The action taken by the control unit may be specific to the application running on the mobile phone 2. That is, the action (e.g. kicking a ball) taken upon reception of an input command originating from a light guide 16 when a first compatible application (e.g. a football video game) is running on the mobile phone 2 is different from the action (e.g. punching) taken upon reception of an input command originating from the same light guide 16 when a second compatible application (e.g. a boxing video game) is running on the mobile phone 2.

Figure 2 shows schematically an example of a method of operating the mobile phone 2 of Figure 1 in an embodiment.

In step 202, the control unit 22 determines whether the display unit 10 is turned on and therefore whether the light source 14 is illuminating the display panel 12. If the display unit 10 is turned off the method loops back to step 202. If the display unit 10 is turned on the method goes to step 204.

In step 204, the control unit 22 determines whether an input command is received from the input command unit 20. If the control unit 22 does not receive an input command from the input command unit 20, the method loops back to step 204. Alternatively, the method may loop back to step 202.

In step 206, the control unit 22 determines whether a compatible application is running on the electronic device 2. If no compatible application is running on the electronic device 2, the method goes to step 208. If a compatible application is running on the electronic device 2, the method goes to step 210.

In step 208, the control unit 22 takes no action and the method loops back to step 204. Alternatively, the method may loop back to step 202.

In step 210, the control unit 22 takes an action depending on the compatible application and the method loops back to step 204. Alternatively, the method may loop back to step 202. For example, the action (e.g. kicking a ball) when a first compatible application is running on the electronic device (e.g. a football video game) is different from the action (e.g. punching) when a second compatible application is running on the electronic device (e.g. a boxing video game).

It will be understood that although the mobile phone 2 has been described above, the teachings of this disclosure are applicable to any electronic device. For example, there are applicable to a tablet computer, laptop computer, game console (including in particular handheld games consoles), computer mouse, camera, desktop computer or other.

It will also be understood that although the compatible application described above are mobile games, any application may be compatible. For example, a text editing application, a drawing applications, a diary application, a dating application, a social media application or other can be compatible. The actions taken when an input command is received can comprise add space, delete character, copy string character or other to allow a user to type faster.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to memory for storing data. This may be provided by a single device or by plural devices. Suitable devices include for example a hard disk and non-volatile semiconductor memory.

Although at least some aspects described herein with reference to the drawings comprise computer processes performed in processing systems or processors, an illustrative example not part of the invention also extends to computer programs, particularly computer programs on or in a carrier, adapted for putting the example into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

## Claims

1. An electronic device (2) comprising:
a display panel (12);
a backlight source (14) arranged to illuminate the display panel (12);
a plurality of light sensors (18);
a housing (4, 6), wherein a front face (4) comprises a window behind which is visible the display panel (12) or which comprises the display panel (12);
a plurality of light guides (16) configured to convey light from the backlight source (14) to the plurality of light sensors (18); and
an input command unit (20) configured to output a respective input command based on an amount of light sensed by a respective light sensor (18);
**characterized in that**:
the housing (4, 6) includes a plurality of slits (8) within a rear face (6) configured to be obstructed by a finger of a user, wherein the rear face (6) is opposite the front face (4);
each light guide (16) comprises a portion (16c) facing a respective slit (8) within the rear face (6); and
each light guide (16) allows the amount of light conveyed from the backlight source (14) to a respective light sensor (18) to be increased in response to a finger of a user obstructing a respective slit (8) within the rear face (6) and the portion (16c) facing the respective slit (8) within the rear face (6) and increasing a reflection coefficient of the portion (16c).

2. An electronic device (2) according to claim 1 , wherein the input command unit (20) is configured to output the respective input command when the amount of light sensed by each light sensor is above a threshold or a variation in the amount of light sensed by the light sensor (18) is above a threshold.

3. An electronic device (2) according to claim 1 or claim 2, comprising:
a control unit (22) configured to take an action in response to receiving the respective input command when a compatible application is running on the electronic device (2).

4. An electronic device (2) according to claim 3, configured such that the action depends on the compatible application that is running on the electronic device (2).

5. An electronic device (2) according to any of claims 1 to 4, wherein the electronic device (2) is a mobile device.

6. A method of operating an electronic device (2) according to claim 1, the method comprising:
following a finger of a user obstructing a respective slit (8), determining an amount of light sensed by a respective light sensor (18); and
outputting a respective input command based on the determined amount of light.

7. A method according to claim 6, comprising:
determining whether a compatible application is running on the electronic device (2) and taking an action in response to the output respective input command when a compatible application is running on the electronic device (2).

8. A method according to claim 7, wherein the action depends on the compatible application that is running on the electronic device (2).

9. A method according to claim 6, comprising:
determining whether a compatible application is running on the electronic device (2) and ignoring the output respective input command when no compatible application is running on the electronic device (2).

## Patentansprüche

1. Elektronische Vorrichtung (2), aufweisend:
eine Anzeigetafel (12);
eine Hintergrundbeleuchtungsquelle (14), die angeordnet ist, um die Anzeigetafel (12) zu beleuchten;
mehrere Lichtsensoren (18);
ein Gehäuse (4, 6), wobei eine Vorderfläche (4) ein Fenster aufweist, hinter der die Anzeigetafel (12) sichtbar ist oder die die Anzeigetafel (12) aufweist;
mehrere Lichtleiter (16), die konfiguriert sind, um Licht von der Hintergrundbeleuchtungsquelle (14) zu den mehreren Lichtsensoren (18) zu befördern; und
eine Eingabebefehlseinheit (20), die konfiguriert ist, um einen jeweiligen Eingabebefehl basierend auf einer von einem jeweiligen Lichtsensor (18) erfassten Lichtmenge auszugeben;
**dadurch gekennzeichnet, dass**
das Gehäuse (4, 6) mehrere Schlitzen (8) innerhalb einer Rückfläche (6) enthält, die konfiguriert sind, um durch einen Finger eines Benutzers blockiert zu werden, wobei die Rückfläche (6) entgegengesetzt zur Vorderfläche (4) ist;
jeder Lichtleiter (16) einen Abschnitt (16c) aufweist, der einem jeweiligen Schlitz (8) in der Rückfläche (6) zugewandt ist; und
jeder Lichtleiter (16) ermöglicht, dass die von der Hintergrundbeleuchtungsquelle (14) zu einem jeweiligen Lichtsensor (18) beförderte Lichtmenge als Reaktion auf einen einen jeweiligen Schlitz (8) in der Rückfläche (6) blockierenden Finger eines Benutzers und den dem jeweiligen Schlitz (8) in der Rückfläche (6) zugewandten Abschnitt (16c) und ein Erhöhen eines Reflexionsgrades des Abschnitts (16c) erhöht wird.

2. Elektronische Vorrichtung (2) nach Anspruch 1, bei welcher die Eingabebefehlseinheit (20) konfiguriert ist, um den jeweiligen Eingabebefehl auszugeben, wenn die durch jeden Lichtsensor erfasste Lichtmenge über einem Schwellenwert liegt oder eine Veränderung der durch den Lichtsensor (18) erfassten Lichtmenge über einem Schwellenwert liegt.

3. Elektronische Vorrichtung (2) nach Anspruch 1 oder Anspruch 2, aufweisend:
eine Steuereinheit (22), die konfiguriert ist, um als Reaktion auf ein Empfangen des jeweiligen Eingabebefehls eine Aktion auszuführen, wenn eine kompatible Anwendung auf der elektronischen Vorrichtung (2) in Betrieb ist.

4. Elektronische Vorrichtung (2) nach Anspruch 3, die so konfiguriert ist, dass die Aktion von der kompatiblen Anwendung abhängt, die auf der elektronischen Vorrichtung (2) in Betrieb ist.

5. Elektronische Vorrichtung (2) nach einem der Ansprüche 1 bis 4, wobei die elektronische Vorrichtung (2) ein mobiles Gerät ist.

6. Verfahren zum Betreiben einer elektronischen Vorrichtung (2) nach Anspruch 1, wobei das Verfahren aufweist:
nachdem ein Finger eines Benutzers einen jeweiligen Schlitz (8) blockiert, Bestimmen einer durch einen jeweiligen Lichtsensor (18) erfassten Lichtmenge; und
Ausgeben eines jeweiligen Eingabebefehls basierend auf der bestimmten Lichtmenge.

7. Verfahren nach Anspruch 6, aufweisend:
Bestimmen, ob eine kompatible Anwendung auf der elektronischen Vorrichtung (2) in Betrieb ist, und Ausführen einer Aktion als Reaktion auf den ausgegebenen Eingabebefehl, wenn eine kompatible Anwendung auf der elektronischen Vorrichtung (2) in Betrieb ist.

8. Verfahren nach Anspruch 7, wobei die Aktion von der kompatiblen Anwendung abhängt, die auf der elektronischen Vorrichtung (2) in Betrieb ist.

9. Verfahren nach Anspruch 6, aufweisend:
Bestimmen, ob eine kompatible Anwendung auf der elektronischen Vorrichtung (2) in Betrieb ist, und Ignorieren des ausgegebenen Eingabebefehls, wenn keine kompatible Anwendung auf der elektronischen Vorrichtung (2) in Betrieb ist.

## Revendications

1. Dispositif électronique (2) comprenant :
un panneau d'affichage (12) ;
une source de rétroéclairage (14) agencée pour éclairer le panneau d'affichage (12) ;
une pluralité de capteurs de lumière (18) ;
un boîtier (4, 6), dans lequel une face avant (4) comprend une fenêtre derrière laquelle le panneau d'affichage (12) peut être vu ou comprend le panneau d'affichage (12) ;
une pluralité de guides de lumière (16) qui sont configurés pour transporter de la lumière de la source de rétroéclairage (14) à la pluralité de capteurs de lumière (18) ; et
une unité de commande d'entrée (20) qui est configurée pour délivrer une commande d'entrée respective sur la base d'une quantité de lumière détectée par un capteur de lumière respectif (18),
**caractérisé en ce que** :
le boîtier (4, 6) inclut une pluralité de fentes (8) à l'intérieur d'une face arrière (6) qui est configurée pour être obstruée par un doigt d'un utilisateur, la face arrière (6) se trouvant à l'opposé de la face avant (4) ;
chaque guide de lumière (16) comprend une portion (16c) faisant face à une fente respective (8) à l'intérieur de la face arrière (6) ; et
chaque guide de lumière (16) permet d'augmenter la quantité de lumière transportée de la source de rétroéclairage (14) à un capteur de lumière respectif (18) en réponse à un doigt d'un utilisateur obstruant une fente respective (8) à l'intérieur de la face arrière (6) et la portion (16c) faisant face à la fente respective (8) à l'intérieur de la face arrière (6), et en augmentant un coefficient de réflexion de la portion (16c).

2. Dispositif électronique (2) selon la revendication 1, dans lequel l'unité de commande d'entrée (20) est configurée pour délivrer la commande d'entrée respective lorsque la quantité de lumière détectée par chaque capteur de lumière est supérieure à un seuil ou lorsqu'une variation de la quantité de lumière détectée par le capteur de lumière (18) est supérieure à un seuil.

3. Dispositif électronique (2) selon la revendication 1 ou 2, comprenant :
une unité de commande (22) qui est configurée pour effectuer une action en réponse à la réception de la commande d'entrée respective lorsqu'une application compatible est en cours d'exécution sur le dispositif électronique (2).

4. Dispositif électronique (2) selon la revendication 3, lequel est configuré de telle sorte que l'action dépend de l'application compatible qui est en cours d'exécution sur le dispositif électronique (2).

5. Dispositif électronique (2) selon l'une quelconque des revendications 1 à 4, dans lequel le dispositif électronique (2) est un dispositif mobile.

6. Procédé de fonctionnement d'un dispositif électronique (2) selon la revendication 1, le procédé consistant à :
à la suite d'un doigt d'un utilisateur obstruant une fente respective (8), déterminer une quantité de lumière détectée par un capteur de lumière respectif (18) ; et
délivrer une commande d'entrée respective sur la base de la quantité de lumière déterminée.

7. Procédé selon la revendication 6, consistant à :
déterminer si une application compatible est en cours d'exécution sur le dispositif électronique (2), et effectuer une action en réponse à la commande d'entrée respective telle que délivrée lorsqu'une application compatible est en cours d'exécution sur le dispositif électronique (2).

8. Procédé selon la revendication 7, dans lequel l'action dépend de l'application compatible qui est en cours d'exécution sur le dispositif électronique (2).

9. Procédé selon la revendication 6, consistant à :
déterminer si une application compatible est en cours d'exécution sur le dispositif électronique (2), et ignorer la commande d'entrée respective telle que délivrée lorsqu'aucune application compatible n'est en cours d'exécution sur le dispositif électronique (2).
